# NOUVEAU FASCICULE DE BREVET EUROPEEN

(11) **EP 1 303 463 B2**
(45) Date de publication et mention de la décision concernant l'opposition: **04.05.2016**
(45) Mention de la délivrance du brevet: 05.12.2007
(21) Numéro de dépôt: 01955413.8
(22) Date de dépôt: 12.07.2001
(51) Int. Cl.: C04B 26/02, C04B 24/26, C04B 24/42

(54) **ENDUIT DE JOINTOIEMENT POUR ELEMENTS DE CONSTRUCTION, SON PROCEDE DE PREPARATION ET PROCEDE DE REALISATION D'UN OUVRAGE**
FUGENMÖRTEL FÜR BAUELEMENTE, SEIN HERSTELLUNGSVERFAHREN UND VERFAHREN ZUR REALISIERUNG EINES BAUOBJEKTES
POINTING COMPOUND FOR STRUCTURAL ELEMENT, METHOD FOR PREPARING SAME AND METHOD FOR PRODUCING A STRUCTURE

(30) Priorité: 18.07.2000 FR 0009393
(43) Date de publication de la demande: 23.04.2003
(73) Titulaire: LAFARGE PLATRES, 84915 Avignon Cedex (FR)
(72) Inventeur: BONETTO, Christian, F-84300 Cavaillon (FR); BOURNE-CHASTEL, Pascal, F-84210 Saint-Didier (FR); PETIT, Alain, F-84800 Isle sur Sorgue (FR)
(74) Mandataire: Pochart, François
(86) Numéro de dépôt international: PCT/FR2001/002269
(87) Numéro de publication internationale: WO 2002/006183

(56) Documents cités:
- EP-A- 0 456 435
- EP-B1- 0 303 371
- WO-A1-97/02395
- FR-A- 2 736 079

## Description

La présente invention concerne un procédé de réalisation d'un ouvrage tel qu'une cloison, un habillage mural ou un plafond.

Il est bien connu d'utiliser des plaques de plâtre pour réaliser des cloisons, des habillages d'éléments verticaux ou inclinés ou pour réaliser des plafonds suspendus ou non.

Ces plaques sont généralement constituées d'une âme essentiellement en plâtre, recouverte sur chacune de ses faces par une feuille servant à la fois d'armature et de parement et qui peut être constituée de, carton ou de fibres minérales.

La demande internationale publiée sous le numéro WO-A-9702595 a pour objet un procédé de construction de second oeuvre dans lequel on assemble des plaques de plâtre avec un premier enduit et on finit les joints entre les plaques avec un enduit complémentaire ayant la composition suivant :
- 50 à 85% d'une charge minérale ;
- 1 à 20% d'un liant organique dispensable en phase aqueuse;
- 0,2 à 5% d'un agent hydrophobe ;
- 1 à 15% d'un agent de maniabilité (rétenteur d'eau/épaississant) ;
- 0,1 à 2% d'un agent glissant ;
- 1 à 12% d'un agent glissant complémentaire ;
- 0,1 à 5% d'un agent dispersant;
- 0,001 à 0,015% d'un pigment ;
- 0,1 à 0,3% d'un biocide ;
- 0,1 à 0,3% d'un agent anti-moussant ; et
- de l'eau.

La couleur de cet enduit est ajustée au mieux à celle du papier de parement.

Un tel enduit est cependant un enduit définition, cela signifie qu'il ne peut pas être utilisé pour le remplissage de l'espace entre les deux plaques, notamment parce qu'il ne permet pas de un bon collage et une bonne adhérence de la bande à joint. Il est donc nécessaire de disposer de deux enduits: un premier enduit, dit enduit de bouchage ou de remplissage, utilise pour remplir ou boucher l'espace entre deux plaques et un second enduit, dit enduit définition, qui vient compléter la jonction entre les deux plaques.

En outre, un tel enduit présente un retrait après durcissement trop important. La couleur de l'enduit du remplissage importe peu car il est appelé à être recouvert par l'enduit définition. En revanche, il doit, après séchage; avoir un retrait négligeable, car il est appliqué sur une épaisseur importante.

Pour ce qui est de l'enduit de finition, sa couleur est importante car elle doit être le plus proche possible de celle du parement de la plaque de plâtre. Mais il n'est pas nécessaire que le retrait de l'enduit définition après séchage soit très faible, car cet enduit n'est appliqué que sur une faible épaisseur. La demande WO-A-9702395 précitée n'adressait donc pas le problème du retrait après séchage, puisque celui-ci est inopérant pour l'application comme enduit définition.

Il serait donc intéressant de disposer d'un enduit qui pourrait servir à la fois d'enduit de remplissage et d'enduit définition. Un tel enduit devrait donc avoir une ou plusieurs, et de préférence toutes les propriétés suivantes :
- avoir une bonne adhérence sur le papier constituant le parement de la plaque de plâtre ;
- permettre un bon collage et une bonne adhérence de la bande à joint ;
- avoir une couleur identique à celle du papier de parement ;
- présenter un retrait après séchage négligeable (par exemple mains de 20% tel que déterminé par le test de l'anneau) ;
- avoir une absorption de l'eau la plus proche possible de celle du papier de parement, ceci afin d'éviter le recours à une couche de primaire avant l'application d'une tapisserie ou la mise en peinture ;
- permettre une adhérence modérée du papier constituant la tapisserie, de manière à rendre possible un ou plusieurs détapissage(s) ultérieur(s) ;
- permettre une mise en peinture aisée.

La Demanderesse a donc poursuivi d'intenses recherches en vue de mettre au point un tel enduit.

Elle est y maintenant parvenue et propose par conséquent un enduit ayant la composition suivante, en pourcentages massiques rapportes à la masse totale d'enduit :
- 50 a 85% d'une charge mineral ;
- 1 à 20% d'un liant organique dispensable en phase aqueuse;
- 1 à 15% d'un agent silicate ;
- 0,2 à 5% d'un agent hydrophobe qui est un dérivé siliconé ;
- 0,05 à 5% d'alcool polyvinylique ;
- de l'eau pour arriver à 100% ;
dans lequel le ratio pondéral de liant : agent silicaté est compris entre 0,5 et 2.

L'objet, de la présente invention est un procédé de réalisation d'un ouvrage, comprenant la juxtaposition de plaques de plâtre présentant un parement en papier, le remplissage de l'espacement entre les plaques au moyen d'un enduit de remplissage, la pose d'une bande, le recouvrement de la bande au moyen de l'enduit de remplissage, puis le recouvrement de l'enduit de remplissage avec un enduit de finition, caractérisé en que l'enduit de remplissage et de finition est un enduit de jointoiement pour éléments de construction comprenant, en pourcentages massiques rapportés à la masse totale d'enduit :
- 50 à 85% d'une charge minérale;
- 1 à 20% d'un liant organique dispersable en phase aqueuse;
- 1 à 15% d'un agent silicaté autre que la charge minérale;
- 0,2 à 5% d'un agent hydrophobe qui est un dérivé siliconé;
- 0,05 à 5% d'alcool polyvinylique;
- de l'eau pour arriver à 100%.
dans lequel le ratio pondéral de liant : agent silicaté est compris entre 0,5 et 2.

D'autres caractéristiques et avantages de l'invention vont maintenant être décrits en détail dans l'exposé qui suit.

### Enduit

L'enduit comprend donc, en pourcentages massiques rapportes à la masse totale d'enduit:
- 50 à 85% d'une charge minérale ;
- 1 à 20% d'un liant organique dispensable en phase aqueuse;
- 1 à 15% d'un agent silicate ;
- 0,2 à 5% d'un agent hydrophobe qui est un dérivé silicone ;
- 0,05 à 5% d'alcool polyvinylique ;
- de l'eau pour arriver à 100% ;
dans lequel le ratio pondéral de liant : agent silicaté est compris entre 0,5 et 2.

Comme charge minérale, on peut utiliser toute charge minérale habituellement employée pour la fabrication d'un enduit de jointoiement. Il s'agit en général d'une charge minérale de couleur claire, de préférence blanche et dont le diamètre moyen d50 se situe en général entre 5 et 35 microns, de sorte que l'enduit donne après séchage une surface lisse correspondant à celle du parement de la plaque.

Comme exemple de charge minérale, on peut citer carbonate de calcium, sulfate de calcium anhydride ou di hydrate, carbonate de magnésium, dolomie, silices, silicates, aluminates ou autres.

De préférence, on utilise du carbonate de calcium CaC0₃.

La charge minérale représente préférentiellement entre 50 et 70% du poids total de l'enduit.

Le ratio pondéral liant:agent silicate est compris entre 0,5 et 2.

Selon un mode de réalisation, le ratio pondéral liant:agent hydrophobe est compris entre 1 ,5 et 10.

Selon un mode de réalisation avantageux de l'invention, la charge minérale comprend en outre de la perlite, de préférence expansée et de préférence encore hydrophobée. La quantité de perlite est alors généralement comprise entre 2 et 5%.

Comme liant organique dispensable en phase aqueuse, on peut citer les homopolymères acétates de polyvinyle (plastifies ou non), les copolymères éthylène/acétate de vinyle (EVA plastifies ou non), éthylène/versatate de vinyle, acétate de vinyle/versatate de vinyle, polyacryliques, copolymères acétate de vinyle/acryliques, copolymères styréniques/acryliques, styrène/butadiène, les terpolymères acétate de vinyle/versatates de vinyle /maléates de vinyle, acétate de vinyle/versatate de vinyle/acryliques, les terpolymères acryliques et leurs mélanges.

La proportion de liant organique est préférentiellement comprise entre 2 et 12% du poids total de l'enduit.

L'agent silicate (diffèrent de la charge minérale) comprend de préférence du talc et/ou du mica et/ou une argile.
On utilise de préférence un mélange de talc et de mica.

La proportion d'agent silicate est préférentiellement comprise entre 3 et 10% du poids total de l'enduit.

L'agent hydrophobe est un dérivé siliconé. Comme dérivé siliconé, on peut citer les siliconates, les silanes, les huiles de silicone hydrogénées, les émulsions de silicone, les émulsions amino-siliconées, les résines alkyl-siloxanes telles que hydrogénomethylpolysiloxane et polydimethylsiloxane aminé, et leurs mélanges.

On utilise de préférence comme dérivé siliconé une résine du type polydimethylsiloxane aminé.

La proportion de dérivé siliconé est préférentiellement comprise entre 0,5 et 3% du poids total de l'enduit.

Avantageusement, la proportion de dérivé silicone est choisie de façon à permettre de réaliser un joint ayant les mêmes propriétés de surface que celles du papier de parement. Ces propriétés de surface sont décoloration ou coloration sous l'effet de la couleur naturelle, réflectance, absorption d'eau de surface. Ces propriétés sont décrites en détail dans la demande WO-A-9702395 (dont le contenu est incorpore par référence), à laquelle il est fait référence pour plus de détails. Il est entendu que les caractéristiques techniques décrites dans cette demande s'appliquent mutatis mutandis à la présente demande.

La proportion d'alcool polyvinylique est préférentiellement comprise entre 0,05 et 1% du poids total de l'enduit.

Selon un mode de réalisation avantageux, l'enduit comprend en outre de l'amidon et/ou un dérivé d'amidon.

La proportion d'amidon et/ou de dérivé d'amidon est en général comprise entre 0,05 et 5%, de préférence entre 0,1 et 1% du poids total de l'enduit.

L'enduit peut être préparé par mélange de ses constituants dans un ordre quelconque.

Bien entendu, sous réserve que les proportions attribuées à chacun des constituants essentiels soient respectées, on peut introduire dans l'enduit, à titre secondaire, des adjuvants utilises usuellement pour faciliter la mise en oeuvre des autres constituants ou conférer à l'enduit des propriétés particulières supplémentaires. A titre d'exemples de tels adjuvants, on peut citer, les agents rétenteurs d'eau ou épaississantes, agents, glissants, les dispersants, les antigels, les pigments, les biocides et les anti-mousse. Ces additifs sont décrits, par exemple, dans la demande WO-A-9702395 (dont le contenu est incorpore par référence), à laquelle il est fait référence pour plus de détails.

L'enduit peut être utilisé pour la réalisation, à l'aide de plaques de plâtre, de nombreux ouvrages tels que des cloisons, des habillages muraux ou des plafonds, suspendus ou non.

L'enduit convient en particulier à la réalisation d'ouvrage au moyen de plaques de plâtre à parement en papier.

Bien entendu, l'enduit peut être utilisé comme enduit de finition uniquement, un enduit classique jouant le rôle d'enduit de remplissage.

### Procédé selon l'invention

La réalisation d'un ouvrage au moyen de plaques de plâtre comprend généralement la juxtaposition de plaques de plâtre, le remplissage de l'espacement entre les plaques au moyen d'un enduit de remplissage, la pose d'une bande, le recouvrement de la bande au moyen de l'enduit de remplissage, puis le recouvrement de l'enduit de remplissage avec un enduit définition.

De façon surprenante, la Demanderesse est parvenue à réaliser un ouvrage en utilisant, comme enduit de remplissage et comme enduit définition, un seul et même enduit. Ceci est obtenu grâce à :
(1) l'enduit qu'elle a mis au point et qui a été' décrit ci-dessus ; et/ou
(2) en appariant la teneur en agent hydrophobe (silicone) du joint (de finition ou complet, à savoir bouchage et finition) avec la teneur en agent hydrophobe (silicone) du parement de la plaque; et/ou
(3) en augmentant la teneur en liant des enduits du type de ceux décrits dans la demande WO-A-9702395, ainsi qu'éventuellement la teneur en agents silicates (autre que la charge minérale).

Concernant le point (1), l'enduit a été décrit en détails plus haut.

Concernant le point (2), l'appariement des teneurs en silicone du parement et de l'enduit n'a pas été mis en évidence dans la demande WO-A-9702395 de façon claire. L'invention propose donc une optimisation du ratio en poids teneur de l'enduit:teneur du parement, compris entre 3 et 10, avec des valeurs de teneur préférées pour le parement et la plaque.

Concernant le point (3), l'adhésion sur bande n'était pas discute et pas mis en évidence dans la demande WOA-9702395, puisque l'adhérence sur bande n'est pas un critère pour les enduits de finition. L'invention propose donc d'augmenter la teneur en liant et/ou d'ajouter de l'alcool polyvinylique a des enduits du type de ceux décrits dans cette demande WO-A-9702395 pour une optimisation de l'adhérence sur bande (sans que les autres qualités ne soient affectées).

Selon une caractéristique supplémentaire et avantageuse de l'invention, on réalise l'assemblage de plaques de plâtre qui ont un parement en papier dont le taux de silicone du couchage est compris entre 0,1 et 1%. Selon une autre caractéristique, la teneur en agent hydrophobe ou silicone de l'enduit est comprise entre 0,5 et 3%. Le ratio en poids teneur de l'enduit:teneur du parement est compris entre 3 et 10 pour l'optimisation décrite plus haut.

Ceci constitue alors un excellent compromis entre une mise en peinture aisée, le maintien efficace de la tapisserie, une aptitude au détapissage est une bonne adhésion de l'enduit sur le parement de la plaque de plâtre, comme cela va apparaître à la lecture des exemples qui suivent.

La demande de brevet européen no EP 521 804 au nom de la Demanderesse décrit un papier de revêtement de plaques de plâtre, et les plaques de plâtre recouvertes avec ce papier. Ces plaques sont tout à fait appropriées pour une utilisation avec l'enduit.

### Exemples

Les exemples suivant sont donnés à titre uniquement illustratif et n'ont aucun caractère limitatif.

On prépare un enduit témoin dont la composition est conforme à la demande internationale précitée WO-A-9702395 et des enduits A à F.

Les différents enduits sont composés, outre des constituants essentiels, d'adjuvants habituellement utilisés dans la fabrication des enduits et bien connus due l'homme du métier.

La composition des différents enduits est donnée dans le tableau suivant :

| Constituants | | Enduits | | | | | | |
|---|---|---|---|---|---|---|---|---|
| Fonction | Nature | Témoin | A | B | C | D | E | F |
| Charge minérale | CaCO₃ | 55,722 | 56,522 | 56,322 | 55,622 | 56,022 | 55,122 | 56,522 |
| Charge minérale | Perlite ⁽¹⁾ | 3,535 | 3,535 | 3,535 | 3,535 | 3,535 | 3,535 | 3,535 |
| Liant | Résine EVA | 3,6 | 3,6 | 3,6 | 4,5 | 3,6 | 4,5 | 3,6 |
| Agent hydrophobe | Siloxane⁽²⁾ | 2,0 | 2,0 | 2,0 | 2,0 | 2,0 | 2,0 | 1,0 |
| Agent de maniabilité | Talc | 1,35 | 1,35 | 1,35 | 1,35 | 1,35 | 1,35 | 1,35 |
| Agent rétenteur d'eau/ épaississant | Ether ⁽³⁾ | 0,45 | 0,45 | 0,45 | 0,45 | 0,45 | 0,45 | 0,45 |
| Agent glissant | Mica | 3,6 | 3,6 | 3,6 | 3,6 | 3,6 | 3,6 | 3,6 |
| Dispersant/Antigel | Ethylène glycol | 0,577 | 0,577 | 0,577 | 0,577 | 0,577 | 0,577 | 0,577 |
| Pigment | Oxyde de fer | 0,01 | 0,01 | 0,01 | 0,01 | 0,01 | 0,01 | 0,01 |
| Biocide | Mélange ⁽⁴⁾ | 0,084 | 0,084 | 0,084 | 0,084 | 0,084 | 0,084 | 0,084 |
| Agent anti-mousse | Tensioactif non ionique | 0,072 | 0,072 | 0,072 | 0,072 | 0,072 | 0,072 | 0,072 |
| Résine de cohésion | EVOH | 0 | 0,2 | 0,4 | 0,2 | 0,2 | 0,2 | 0,2 |
| Agent d'adhérence | Dérivé amidonné | 0 | 0 | 0 | 0 | 0,5 | 0,5 | 0 |
| Complément à 100 | Eau | 29 | 28 | 28 | 28 | 28 | 28 | 29 |
| TOTAL | | 100 | 100 | 100 | 100 | 100 | 100 | 100 |
| (1) : perlite expansée hydrophobée | | | | | | | | |
| (2) : résine du type polydiméthylsiloxane aminé | | | | | | | | |
| (3) : éther cellulose modifié | | | | | | | | |
| (4) : mélange synergique de composés aromatiques (non métalliques, non phénoliques) | | | | | | | | |

### Exemple 2

On a réalisé des essais d'adhérence de l'enduit à prise Pregyliss 35 de la gamme Lafarge Platres sur des plaques telles que décrites dans la demande EP-A-521804 précitée ayant :
a) un couchage contenant 0% de silicone.
b) un couchage contenant 0,2% de silicone.
c) un couchage contenant 0,4% de silicone.

Il est apparu qu'une présence de silicone trop importante dans le couchage était défavorable à un bon accrochage de l'enduit de prise traditionnel (valeur d'adhésion au mieux de 0,25MPa).

### Exemple 3

On a effectué des tests d'adhérence dans les conditions décrites au paragraphe 6.5 du projet de norme européenne CEN241 N175 de janvier 1998, couvrant les caractéristiques des enduits sur des échantillons des enduits Témoin et A à F de l'exemple 1, avec des plaques ayant un taux de silicone dans le couchage de 0,4%.

Le collage de bande a été déterminé dans les conditions décrites dans le « Guide Technique - Enduits de traitement des joints entre plaque de plâtre Modalités d'essais, du Groupe Spécialisé n°9 de la Commission du CSTB chargée de formuler des avis techniques (Janvier 1999).

Les résultats sont regroupés dans le tableau ci-joint.

| | | Enduits | | | | | | |
|---|---|---|---|---|---|---|---|---|
| Type de test | | Témoin | A | B | C | D | E | F |
| Adhérence | Valeurs (Mpa) | 0,249 | 0,362 | 0,418 | 0,433 | 0,336 | 0,397 | 0,418 |
| | Shore C | 60 | 67 | 71 | 71 | 66 | 73 | 70 |
| Collage de bande A2P® | Masse (g) | 376 | 1052 | 1357 | 1331 | 1148 | 1763 | 1326 |
| | Délaminage (%) | 0 | 0 | 45 | 10 | 5 | 65 | 15 |
| Collage de bande SOROPA® | Masse (g) | 522 | 1160 | 1425 | 1366 | 1278 | 1585 | 1360 |
| | Délaminage (%) | 0 | 20 | 75 | 50 | 35 | 100 | 85 |

Il apparait clairement que taus les enduits sont plus performants que l'enduit témoin.

### Exemple 4

On a réalisé des joints comme indique dans l'Exemple 3. Puis, on a collé une tapisserie de façon classique.

Ensuite, en vue de, déterminer l'impact du taux de silicone du couchage du papier de parement des plaques sur le comportement au détapissage, on a procédé à un de tapissage à la vapeur.

Il est apparu que le détapissage est plus difficile lorsque les plaques ont un couchage ne contenant pas de silicone.

On a procédé ainsi à plusieurs tapissages puis détapissages. Les résultats sont les mêmes que pour le premier détapissage. Cependant, on a pu noter que sur les plaques a couchage silicone, a chaque détapissage, on enlevait nettement plus de colle que sur les plaques a couchage non silicone.

### Exemple 5

On a procédé à un test pour déterminer le retrait après séchage. On obtient les résultats suivants:

| Enduit | Témoin | A | B |
|---|---|---|---|
| Retrait (%) | 21 | 17 | 17 |

Le retrait de l'enduit est plus faible que celui du Témoin.

### Exemple 6

On a procédé a un test dans les conditions décrites dans la demande WO-A-9702395 pour déterminer les valeurs L*, a* et b* (norme CIE 1976, appareil Minolta CR31 0). On obtient les valeurs suivantes, la colonne de gauche donnant une moyenne pour les enduits et celle de droite pour la plaque selon la demande EP-A-521804 utilisée dans l'exemple 3.

| | Enduit | Plaque |
|---|---|---|
| L* | 86 à, 88,2 | 86,5 à 88,7 |
| a* | -0,5 à, -0,7 | -0,3 à -0,6 |
| b* | 3,7 à 4,1 | 2,8 à 3,8 |

Les écarts entre enduit et plaque ne sont pas perceptibles à l'oeil. Les caractéristiques de surface, telles qu'exprimées selon, la demande WO-A-9702395 précitée, sont donc très bonnes.

L'enduit peut être un enduit de prise ou un enduit de séchage; de préférence il s'agit d'un enduit de séchage. Dans ce dernier cas, l'enduit de séchage est avantageusement un enduit dit prêt-a-l'emploi (readymix), c'est-à-dire incorporant déjà l'eau.

## Revendications

1. Procédé de réalisation d'un ouvrage, comprenant la juxtaposition de plaques de plâtre présentant un parement en papier, le remplissage de l'espacement entre les plaques au moyen d'un enduit de remplissage, la pose d'une bande, le recouvrement de la bande au moyen de l'enduit de remplissage, puis le recouvrement de l'enduit de remplissage avec un enduit de finition, **caractérisé en que** l'enduit de remplissage et de finition est un enduit de jointoiement pour éléments de construction comprenant, en pourcentages massiques rapportés à la masse totale d'enduit :
- 50 à 85% d'une charge minérale;
- 1 à 20% d'un liant organique dispersable en phase aqueuse;
- 1 à 15% d'un agent silicaté autre que la charge minérale;
- 0,2 à 5% d'un agent hydrophobe qui est un dérivé siliconé;
- 0,05 à 5% d'alcool polyvinylique;
- de l'eau pour arriver à 100%.
dans lequel le ratio pondéral de liant : agent silicaté est compris entre 0,5 et 2.

2. Procédé selon la revendication précédente, dans lequel l'enduit comprend en outre de l'amidon et/ou un dérivé d'amidon.

3. Procédé selon la revendication précédente, dans lequel la proportion d'amidon et/ou de dérivé d'amidon est comprise entre 0,05 et 5%.

4. Procédé selon l'une des revendications précédentes, dans lequel l'agent silicaté comprend du talc et/ou du mica et/ou une argile.

5. Procédé selon la revendication précédente, dans lequel l'agent silicate est un mélange talc et mica.

6. Procédé selon l'une des revendications précédentes, dans lequel le ratio pondéral liant:agent hydrophobe est compris entre 1,5 et 10.

7. Procédé selon l'une des revendications précédentes, dans lequel la charge minérale comprend en outre de la perlite, de préférence expansée.

8. Procédé selon la revendication précédente, dans lequel la charge minérale comprend entre 2 et 5% de perlite, par rapport au poids total de l'enduit.

9. Procédé selon l'une des revendications précédentes, dans lequel le liant organique dispersable en phase aqueuse est choisi dans le groupe constitué par les homopolymères acétates de polyvinyle (plastifiés ou non), les copolymères éthylène/acétate de vinyle (EVA plastifiés ou non), éthylène/versatate de vinyle, acétate de vinyle/versatate de vinyle, polyacryliques, copolymères acétate de vinyle/acryliques, copolymères styréniques/acryliques, styrène/butadiène, les terpolymères acétate de vinyle/versatate de vinyle/acryliques, acétate de vinyle/versatates de vinyle/ maléates de vinyle, les terpolymères acryliques et leurs mélanges.

10. Procédé selon l'une des revendications précédentes, dans lequel le dérivé siliconé est choisi dans le groupe constitué par les siliconates, les silanes, les huiles de silicone hydrogénées, les émulsions de silicone, les émulsions amino-siliconées, les résines alkyl-siloxanes telles que hydrogénométhylpolysiloxane et polydiméthylsiloxane aminé, et leurs mélanges.

11. Procédé selon l'une des revendications précédentes, dans lequel la charge minérale comprend du carbonate de calcium CaC0₃.

12. Procédé selon l'une des revendications précédentes, dans lequel l'enduit comprend, en pourcentages massiques rapportés à la masse totale d'enduit:
- 50 à 70% d'une charge minérale;
- 2 à 12% d'un liant organique dispersable en phase aqueuse;
- 3 à 10% d'un agent silicaté;
- 0,5 à 3% d'un agent hydrophobe qui est un dérivé siliconé;
- 0,05 à 1% d'alcool polyvinylique;
- 0,1 à 1% d'amidon et/ou d'un dérivé d'amidon;
- de l'eau pour arriver à 100%.

13. Procédé selon l'une des revendications précédentes, dans lequelle taux de silicone du couchage du papier du parement est compris 0,1 et 1%.

## Patentansprüche

1. Verfahren zur Verwirklichung eines Bauwerks, umfassend die Anordnung von Gipsplatten nebeneinander, die eine Verkleidung aus Papier, die Befüllung des Raums zwischen den Platten mit Hilfe eines Füllmörtels, das Aufbringen eines Bandes, die Abdeckung des Bandes mit dem Füllmörtel, dann die Abdeckung des Füllmörtels mit einem Fertigstellungsmörtel, **dadurch gekennzeichnet, dass** der Füll- und der Fertigstellungsmörtel ein Fugenmörtel für Bauelemente ist, umfassend in Masseprozent, bezogen auf die Gesamtmörtelmasse:
- 50 bis 85 % eines mineralischen Füllstoffs;
- 1 bis 20 % eines organischen, in wässeriger Phase dispergierbaren Bindemittels;
- 1 bis 15 % eines anderen silikathaltigen Wirkstoffs als der mineralische Füllstoff;
- 0,2 bis 5 % eines hydrophoben Wirkstoffs, der ein Silikonderivat ist;
- 0,05 bis 5 % Polyvinylalkohol;
- Wasser, um die 100 % aufzufüllen,
wobei das Gewichtsverhältnis Bindemittel : silikathaltiger Wirkstoff zwischen 0,5 und 2 beträgt.

2. Verfahren nach vorhergehendem Anspruch, bei dem der Mörtel ferner Stärke und/oder ein Stärkederivat umfasst.

3. Verfahren nach vorhergehendem Anspruch, bei dem der Anteil von Stärke und/oder von Stärkederivat zwischen 0,05 und 5 % beträgt.

4. Verfahren nach einem der vorhergehenden Ansprüche, bei dem der silikathaltige Wirkstoff Talk und/oder Mika und/oder einen Ton umfasst.

5. Verfahren nach vorhergehendem Anspruch, bei dem der silikathaltige Wirkstoff ein Gemisch aus Talk und Mika ist.

6. Verfahren nach einem der vorhergehenden Ansprüche, bei dem das Gewichtsverhältnis Bindemittel : hydrophober Wirkstoff zwischen 1,5 und 10 beträgt.

7. Verfahren nach einem der vorhergehenden Ansprüche, bei dem der mineralische Füllstoff ferner Perlit, vorzugsweise in expandierter Form, umfasst.

8. Verfahren nach vorhergehendem Anspruch, bei dem der mineralische Füllstoff zwischen 2 und 5 % Perlit bezogen auf das Gesamtgewicht des Mörtels umfasst.

9. Verfahren nach einem der vorhergehenden Ansprüche, bei dem das in wässeriger Phase dispergierbare organische Bindemittel in der Gruppe ausgewählt wird, die gebildet ist von den Polyvinylazetathomopolymeren (plastifiziert oder nicht), den Ethylen/Vinylazetat- (EVA plastifiziert oder nicht), Ethylen/Vinylversatat-, Vinylazetat/Vinylversatat-, Polyacryl-Copolymeren, Vinylazetat/Acryl-Copolymeren, Styrol/Acryl-Copolymeren, Styrol/Butadien-Copolylmeren, den Vinylazetat/Vinylversatat/Acryl-, Vinylazetat/Vinylversatat/Vinylmaleat-Terpolymeren, den Acrylterpolymeren und ihren Gemischen.

10. Verfahren nach einem der vorhergehenden Ansprüche, bei dem das Silikonderivat in der Gruppe ausgewählt wird, die gebildet ist von: den Silikonaten, den Silanen, den wasserstoffhaltigen Silikonölen, den Silikonemulsionen, den Aminosilikonemulsionen, den Alkylsiloxanen, wie beispielsweise Hydrogenmethylpolysiloxan und Aminopolydimethylsiloxan, und ihren Gemischen.

11. Verfahren nach einem der vorhergehenden Ansprüche, bei dem der mineralische Füllstoff Kalziumkarbonat CaC0₃ umfasst.

12. Verfahren nach einem der vorhergehenden Ansprüche, bei dem der Mörtel, umfassend in Masseprozent bezogen auf die Gesamtmörtelmasse, umfasst:
- 50 bis 70 % eines mineralischen Füllstoffs;
- 2 bis 12 % eines organischen, in wässeriger Phase dispergierbaren Bindemittels;
- 3 bis 10 % eines silikathaltigen Wirkstoffs;
- 0,5 bis 3 % eines hydrophoben Wirkstoffs, der ein Silikonderivat ist;
- 0,05 bis 1 % Polyvinylalkohol;
- 0,1 bis 1 % Stärke und/oder eines Stärkederivats;
- Wasser, um die 100 % aufzufüllen.

13. Verfahren nach einem der vorhergehenden Ansprüche, bei dem die Silikonrate der Papierverkleidung zwischen 0,1 und 1 % beträgt.

## Claims

1. A method for producing a structure comprising the juxtaposition of plasterboards having a paper facing, the filling of the space between the boards with a filler plaster, the application of a tape, coating the tape with the filler plaster, then coating the filler plaster with a finishing plaster, **characterized in that** the filler and finishing plaster is a pointing plaster for structural elements comprising in weight percentage relative to the total weight of the plaster:
- 50 to 85 % mineral filler;
- 1 to 20 % organic binder dispersible in an aqueous phase;
- 1 to 15 % silicate agent other than the mineral filler;
- 0.2 to 5 % silicon-derived hydrophobic agent;
- 0.05 to 5 % polyvinyl alcohol;
- water up to 100 %.
wherein the binder/silicate agent weight ratio is between 0.5 and 2.

2. The method according to the preceding claim wherein the plaster further comprises starch and/or a starch derivative.

3. The method according to the preceding claim wherein the proportion of starch and/or starch derivative is between 0.05 and 5 %.

4. The method according to any of the preceding claims wherein the silicate agent comprises talc and/or mica and/or a clay.

5. The method according to the preceding claim wherein the silicate agent is a talc and mica mixture.

6. The method according to one of the preceding claims wherein the binder/hydrophobic agent weight ratio is between 1.5 and 10.

7. The method according to one of the preceding claims wherein the mineral filler further comprises perlite, preferably expanded.

8. The method according to the preceding claim wherein the mineral filler comprises between 2 and 5 % perlite relative to the total weight of the plaster.

9. The method according to one of the preceding claims wherein the organic binder dispersible in an aqueous phase is selected from the group formed by polyvinyl acetate homopoymers (plasticised or unplasticised), ethylene/vinyl acetate (EVA plasticised or unplasticised), ethylene/viny versatate, vinyl acetate/vinyl versatate copolymers, polyacrylics, vinyl acetate/acrylic copolymers, styrene/acrylic, styrene/butadiene copolymers, vinyl acetate/vinyl versatate/acrylic terpolymers, vinyl acetate /vinyl versatate/vinyl maleate terpolymers, acrylic terpolymers and the mixtures thereof.

10. The method according to one of the preceding claims wherein the silicon derivative is selected from the group formed by siliconates, silanes, hydrogenated silicon oils, silicone emulsions, amino-silicone emulsions, alkyl-siloxane resins such as hydrogenomethylpolysiloxane and amino polydimethylsiloxane and the mixtures thereof.

11. The method according to one of the preceding claims wherein the mineral filler comprises calcium carbonate CaCO₃.

12. The method according to one of the preceding claims wherein the plaster in weight percentage relative to total plaster weight, comprises:
- 50 to 70 % mineral filler;
- 2 to 12 % organic binder dispersible in an aqueous phase;
- 3 to 10 % silicate agent;
- 0.5 to 3 % silicone-derived hydrophobic agent;
- 0.05 to 1 % polyvinyl alcohol;
- 0.1 to 1 % starch and/or starch derivative;
- water up to 100 %.

13. The method according to one of the preceding claims wherein the silicone content of the coating of the paper facing is between 0.1 and 1 %.
